# EUROPÄISCHE PATENTSCHRIFT

(11) **EP 1 637 383 B1**
(45) Veröffentlichungstag und Bekanntmachung des Hinweises auf die Patenterteilung: **12.11.2008**
(21) Anmeldenummer: 05020057.5
(22) Anmeldetag: 15.09.2005
(51) Int. Cl.: B60K 17/28

(54) **Nutzfahrzeug mit stufenlos verstellbarem Fahr- und/oder Zapfwellenantrieb**
Utility vehicle comprising a continuously variable drive and power take off assembly
Véhicule utilitaire comprenant un ensemble d'entraînement et de prise de force à variation continue

(30) Priorität: 17.09.2004 DE 102004045314
(43) Veröffentlichungstag der Anmeldung: 22.03.2006
(73) Patentinhaber: PIV Drives GmbH, 61352 Bad Homburg (DE)
(72) Erfinder: Gottfried, Anton Johann, 5143 Feldkirchen (AT)
(74) Vertreter: Petersen, Frank

(56) Entgegenhaltungen:
- DE-A1- 1 655 894
- DE-A1- 3 901 229
- DE-A1- 3 941 024
- PATENT ABSTRACTS OF JAPAN Bd. 010, Nr. 253 (M-512), 29. August 1986 (1986-08-29) & JP 61 081294 A (YANMAR DIESEL ENGINE CO LTD), 24. April 1986 (1986-04-24)

## Beschreibung

Die Erfindung betrifft ein Nutzfahrzeug für die Land- und Forstwirtschaft, insbesondere im alpinen Wirtschaftsraum, mit einem Dieselmotor, einem stufenlos übersetzungsveränderlichen Getriebe, sowie mit einem Fahrantrieb und mit einer Zapfwelle, die von dem Motor antreibbar sind, gemäß dem Oberbegriff des beigefügten Hauptanspruches.

Unter Fahrantrieb wird im vorliegenden Fall auch ein mehrteiliger Antriebsstrang verstanden, der zu den Antriebsrädern des Nutzfahrzeuges führt.

Die bekannten Nutzfahrzeuge haben üblicherweise einen langhubigen Dieselmotor, der einerseits einen sogenannten "steilen Drehmomentanstieg" aufweist. D.h. ein solcher Motor hat sein maximales Drehmoment beispielsweise bei 1.600 min⁻¹, während er normalerweise bei einer Nenndrehzahl von ca. 2.200 min⁻¹ betrieben wird, bei der aber ein niedrigeres Drehmoment vorliegt.

Andererseits steigt das Drehmoment des Motors auch bei Drehzahlen oberhalb der niedrigen Leerlaufdrehzahl von 800 min⁻¹ steil an. In einschlägigen Fachkreisen wird diese Motorcharakteristik auch als "Büffelcharakteristik" bezeichnet.

Wird nun ein solcher Motor, sei es aufgrund von Belastungen im Fahrbetrieb, sei es durch die an die Zapfwelle angekoppelte Belastung von seiner Nenndrehzahl zu niedrigeren Drehzahlen "gedrückt", liefert ein solcher bekannter Motor bei niedrigeren Drehzahlen ein entsprechend höheres Drehmoment mit insgesamt nahezu konstanter Leistung. Sinkt die Last durch die Arbeitsmaschine wieder, regelt sich der Motor wieder auf die Nenndrehzahl.

Derartige Motoren sind aufgrund ihrer geringeren Fertigungszahlen relativ teuer und konstruktionsbedingt normalerweise auch sehr schwer. Letzteres ist insbesondere bei Arbeiten im alpinen Wirtschaftsraum von Nachteil, wo besonders leichte Fahrzeuge benötigt werden. Aber auch sonst beschränken schwere Motoren die Nutzlast, die bei einem vorgegebenen maximalen Gesamtgewicht von einem Nutzfahrzeug transportiert werden kann. Man wünscht sich also einen leichteren und auch billigeren Motor.

Solche Motoren sind insbesondere aus dem Leichttransporterbereich bekannt. Für stationäre Zwecke werden diese von den Automobilfirmen auch als "Industriemotoren" angeboten.

Derartige Motoren mit einer relativ flachen Kennlinie wurden teilweise auch schon in Nutzfahrzeugen für die Landwirtschaft eingesetzt, beispielsweise im sogenannten UNIMOG.

Die bei den oben beschriebenen Motoren mit Büffelcharakteristik erfolgende Drehmomenterhöhung bei Drehzahlabsenkung wird hier aber nicht realisiert, was als erheblicher Nachteil empfunden wird.

Um einen solchen Nachteil zu umgehen, wurde vorgeschlagen, eine solche Drehmomenterhöhung über ein dem Motor nachgeschaltetes stufenlos verstellbares Getriebe zu bewirken. Mit einer derartigen Konstruktion kann nämlich entweder bei konstantem Drehmoment auf der Antriebsseite das Drehmoment auf der Abtriebsseite angehoben werden, wobei dort gleichzeitig dann die Drehzahl entsprechend sinkt oder aber bei konstanter Drehzahl auf der Abtriebsseite auf der Antriebsseite die Drehzahl um 30 ― 40 % erhöht werden, womit ggf. sogar eine höhere Leistung zur Verfügung stünde als bei den zuvor diskutierten Motoren mit "Büffelcharakteristik".

Der oben beschriebene steile Drehmomentanstieg von Motoren mit der sogenannten Büffelcharakteristik ist also bei der Verwendung eines stufenlosen Getriebes für den Fahrantrieb und/oder den Zapfwellenantrieb nicht mehr nötig und statt dessen könnte somit ein preiswerter und leichter Motor aus der Großserienfertigung von Leichttransportern benutzt werden, wobei konstruktionsbedingt damit sogar noch bis zu 15 % mehr Leistung bei gleichem Bauraum realisiert werden können.

Gerade bei Fahrzeugen für den alpinen Wirtschaftsraum hätte dies die bereits oben angesprochenen Vorteile.

Insbesondere hat auch bei Arbeiten an Steilhängen im alpinen Wirtschaftsraum ein solches stufenlos verstellbares Getriebe außerdem den Vorteil, dass mit ihm eine Übersetzungsänderung erreicht werden kann, ohne dass wie bei einem klassischen Mehrstufengetriebe eine Unterbrechung des Kraftflusses für einen Schaltvorgang vorgesehen werden müsste, was insbesondere beim Fahrbetrieb in steilem Gelände nicht nur störend sondern wegen der damit verbundenen Rutschgefahr sogar riskant sein kann.

Aspekte dieser Art sind aber in der normalen Forst- oder Landwirtschaft von sekundärer Bedeutung, so dass dort die bisher bekannten schwereren Motoren bevorzugt werden, da ihr höheres Gewicht zu Vorteilen bei der Erbringung von Zugarbeiten wie Pflügen etc. führt.

Es ist in der Literatur auch vorgeschlagen worden, insbesondere auch den Zapfwellenantrieb an einem Nutzfahrzeug über ein stufenlos verstellbares (Kegelscheiben-) Getriebe mit einem Motor zu verbinden.

Viele Nutzfahrzeuge (zu denen grundsätzlich auch Zweiachsmäher oder Traktoren gehören), die in der Land- oder Forstwirtschaft eingesetzt werden, verrichten nämlich Zapfwellenarbeiten auch im Stillstand, z. B. für den Betrieb einer Seilwinde oder (Kippmast-)Seilbahn, beim Steilhangpflügen über Spillwinden, für ein Notstromaggregat, eine Pumpe, einen Güllemixer o. ä. Für derartige "stationäre" Anwendungsfälle ist eine Leistungskonstanz auch bei niedrigeren als der Nenndrehzahl von erheblichem Vorteil.

Es liegt auf der Hand, dass das Vorsehen von zwei stufenlosen Getrieben (d. h. eines für den Fahrantrieb, eines für den Zapfwellenantrieb) in einem entsprechenden Nutzfahrzeug dessen Leergewicht unerwünscht erhöht und damit die Nutzlast des Fahrzeugs verringert. Abgesehen davon würde ein entsprechender baulicher Aufwand auch höhere Kosten verursachen.

Es ist außerdem wesentlich zu sehen, dass aufgrund der unterschiedlichsten Anforderungen an Zapfwellenantriebe diese auf verschiedenste Weisen realisiert werden:

Hier sind zum einen die sogenannten "Motorzapfwellen" zu nennen, die direkt vom Motor angetrieben werden. Ihre Drehzahl ist direkt von der Motordrehzahl abhängig und eine solche Motorzapfwelle arbeitet also auch dann weiter, wenn der Fahrantrieb beispielsweise durch eine Fahrkupplung getrennt wurde. Vergleichbar mit der Motorzapfwelle ist die sogenannte "Getriebezapfwelle", die ihren Antrieb über die Zwischenschaltung einer Kupplung und/oder eines Getriebes vom Motor erhält. Bei diesen Getriebezapfwellen ist bei einer bestimmten Drehzahl des Motors insbesondere eine Normdrehzahl von z.B. 540 min⁻¹ vorhanden. Diese Normdrehzahl der Zapfwelle wird üblicherweise bei der Nenndrehzahl des Motors erreicht. Somit werden über derartige Getriebezapfwellen Zusatzgeräte angetrieben, die auf diese genannte Normdrehzahl eingestellt sind.

Als letztes ist noch die sogenannte "Wegzapfwelle" zu nennen, deren Drehzahl mit der Fahrgeschwindigkeit des Nutzfahrzeuges korreliert. Die Fahrgeschwindigkeit des Nutzfahrzeuges und die Drehzahl der Zapfwelle stehen dabei immer in einem konstanten Verhältnis zueinander. Hierbei ist es auch bekannt, dass sich die Drehrichtung der Wegzapfwelle bei Vor- bzw. Rückwärtsfahrt ändert.

Diese Zapfwellenarten habe je nach Anwendungsfall jeweils ihre Berechtigung, da mit keiner dieser Zapfwellen allein die unterschiedlichsten Anwendungsfälle jeweils alle ausreichend berücksichtigt werden können.

Es ist dabei, z.B. aus der DE-A-1655894 bekannt, dass Schaltmittel vorgesehen sind, über die die Zapfwelle alternativ mit der Antriebsseite oder der Abtriebsseite des stufenlosen Getriebes zu verbinden ist.

Dies gibt die Möglichkeit, den Zapfwellenantrieb entweder mit einer zur Motordrehzahl konstant proportionalen Drehzahl (quasi als Motorzapfwelle bzw. als Getriebezapfwelle) laufen zu lassen oder aber mit einer Drehzahl, die über das stufenlose Getriebe ideal an die Zapfwellenanforderungen angepasst werden kann. Grundsätzlich kann man mit einer solchen Konstruktion auf ein separates stufenloses Getriebe nur zum Antrieb der Zapfwelle verzichten, wodurch sich bei dem Nutzfahrzeug nicht nur die Nutzlast erhöht, sondern gleichzeitig auch dessen Kosten geringer werden.

Hiervon ausgehend liegt der vorliegenden Erfindung die Aufgabe zugrunde, ein Nutzfahrzeug wie oben beschrieben derart weiterzuentwickeln, dass es breitere Einsatzmöglichkeiten erhält, wobei die Nutzlast möglichst gesteigert werden soll.

Diese Aufgabe wird erfindungsgemäß dadurch gelöst, dass in dem Schaltmittel zur alternativen Verbindung der Zapfwelle mit der Antriebsseite oder der Abtriebsseite des Kegelscheibengetriebes auf dem Weg der Drehmomentübertragung vom Motor zur Zapfwelle ein Mehrfachwellenschalter mit einer Schiebehülse vorgesehen, ist.

Diese Schiebehülse ist dabei insbesondere auch in Stellungen bringbar, in denen die Zapfwelle und der Motor drehmomentmäßig voneinander getrennt sind.

Durch diese Schiebehülse ist eine konstruktiv klein- und damit leichtbauende Schaltvorrichtung gefunden.

Die Schiebehülse kann insbesondere über ein Schaltgestänge verschiebbar sein, das an seinem der Schiebehülse abgewandten Ende durch einen Fährer des Nutzfahrzeugs entsprechend zu betätigen ist.

Vorzugsweise wird das stufenlose Getriebe als ein stufenlos verstellbares Kegelscheibengetriebe ausgebildet, das gegenüber anderen stufenlosen Getrieben Vorteile hat bezüglich des Wirkungsgrades und des Verschleißes.

Verbindet man bei einer wie oben beschriebenen Konstruktion die Zapfwelle und den Fahrantrieb mit der Abtriebsseite des als stufenloses Getriebe vorgesehenen Kegelscheibengetriebes, hat die Zapfwelle grundsätzlich eine Drehzahl proportional zur Fahrgeschwindigkeit des Nutzfahrzeuges, was grundsätzlich als "Wegzapfwelle" bekannt ist.

Bei einer Weiterbildung der zuletzt beschriebenen Konstruktion kann auf der Abtriebsseite des Kegelscheibengetriebes im Fahrantrieb eventuell auch noch eine auch lastschaltbare Trennkupplung vorgesehen sein. Über diese kann gegebenenfalls der Fahrantrieb von der Abtriebsseite des Kegelscheibengetriebes getrennt werden und es kann damit erreicht werden, dass der Vorteil eines stufenlosen Getriebes nun voll für die Zapfwellenarbeiten benutzt werden kann, auch während das Fahrzeug gleichzeitig stillsteht. Unter diesen Vorteilen ist insbesondere wieder die Drehmomenterhöhung mit Drehzahlabsenkung bei vorteilhafter Leistungskonstanz des Motors zu erwähnen.

Vorteilhafterweise ist für das Kegelscheibengetriebe eine elektronische Regelung vorgesehen, um im Betrieb die Fahrgeschwindigkeit und/oder die Drehzahl entweder der Zapfwelle oder des Motors optimieren zu können.

Der elektronischen Regelung kann dabei als Führungsgröße beispielsweise ein zum Steuerdruck innerhalb des Kegelscheibengetriebes proportionales Signal zugeführt werden.

Es ist aber auch möglich, der elektronischen Regelung des Kegelscheibengetriebes als Führungssignal direkt ein Signal aus einer elektronischen Motorsteuerung zuzuführen.

Weitere Vorteile und Merkmale der Erfindung ergeben sich aus der nachfolgenden Beschreibung eines Ausführungsbeispiels. Dabei zeigt
- Figur 1: einen Antrieb eines erfindungsgemäßen Nutzfahrzeuges in Prinzipdarstellung;
- Figur 2: den Schnitt durch ein im Antrieb gemäß Figur 1 enthaltenes Kegelscheibengetriebe;
- Figur 3: eine Vergrößerung des Details III in Figur 2.

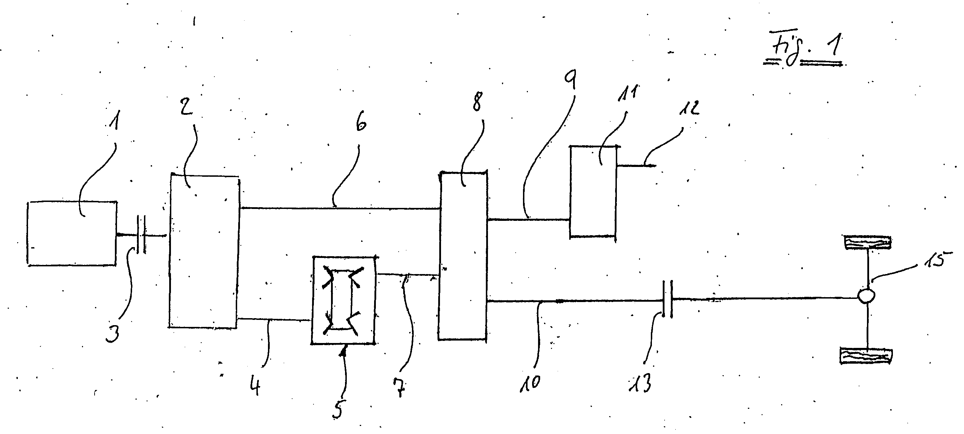

In Figur 1 ist der Antriebsstrang eines Nutzfahrzeuges als Prinzipskizze dargestellt. Man erkennt einen Motor 1 und ein Verteilgetriebe 2. Dazwischen befindet sich eine Trennkupplung 3.

Von dem Verteilgetriebe 2 verläuft eine Antriebswelle 4 zu einem Kegelscheibensatz 5 und eine Durchtriebswelle 6 zu einem Mehrfachwellenschalter 8. Mit diesem Mehrfachwellenschalter 8 ist auch der Kegelscheibensatz 5 über eine Abtriebswelle 7 verbunden.

Der Mehrfachwellenschalter 8 weist einen Zapfwellenausgang 9 auf sowie einen Fahrantriebsausgang 10.

Der Zapfwellenausgang 9 führt über ein Zwischengetriebe 11 zu einer Zapfwelle 12, während der Fahrantriebsausgang 10 über eine Schaltkupplung 13 mit einer Antriebsachse 15 verbunden ist.

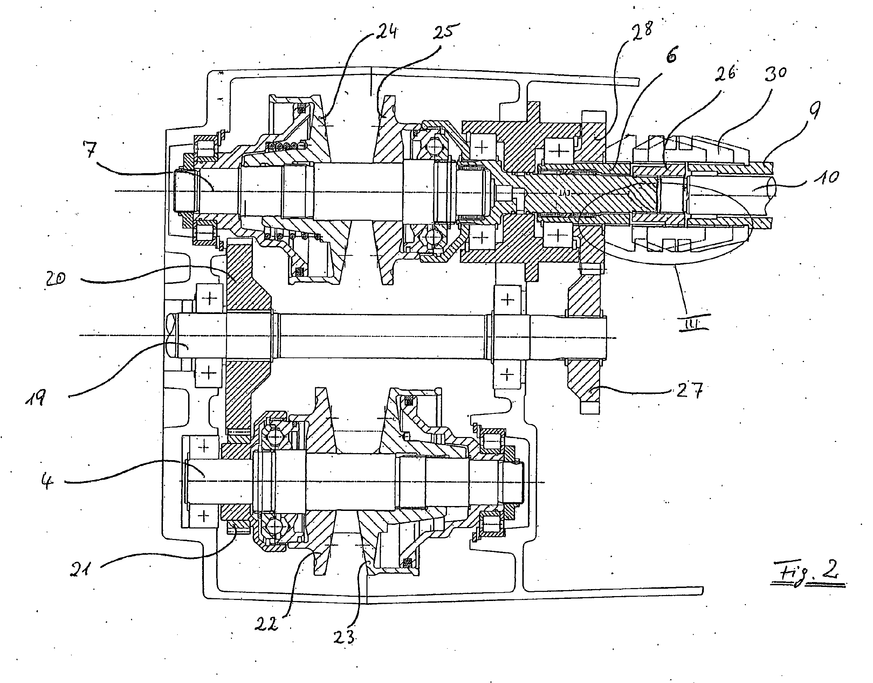

Das oben angesprochen Verteilgetriebes ist zusammen mit dem entsprechenden Kegelscheibensatz 5 und dem Wellenschalter 8 als eine bauliche Einheit ausgebildet, die in der Figur 2 detaillierter dargestellt ist.

Man erkennt in der Figur 2, dass auf der Eingangswelle 19 der baulichen Einheit im hier dargestellten Beispiel ein Zahnrad 20 sitzt, das mit einem Ritzel 21 kämmt. Dieses Ritzel 21 sitzt drehfest auf der Antriebswelle 4 für den Kegelscheibensatz 5. Damit bilden das Zahnrad 20 und das Ritzel 21 gemäß Figur 2 einen Teil des Verteilgetriebes 2 gemäß Figur 1.

Von dem Kegelscheibensatz 5 sitzen zwei Kegelscheiben 22, 23 auf der Antriebswelle 4. Diese zwei antriebsseitigen Kegelscheiben 22, 23 stehen über ein (nicht dargestelltes Zugmittel) in Verbindung mit einem abtriebsseitigen Scheibenpaar 24, 25, das auf der Abtriebswelle 7 sitzt. Auf jeder der Wellen 4 und 7 ist eine der Kegelscheiben, nämlich die Kegelscheiben 23 und 24, zur Einstellung der Getriebeübersetzung axial verschiebbar. ― Die entsprechenden Extrempositionen sind bei diesen beiden Kegelscheiben jeweils unterhalb bzw. oberhalb der Wellen 4 bzw. 7 dargestellt. ― Die jeweils andere Kegelscheibe ist axial fest montiert. Alle Kegelscheiben sind rotationsfest auf den Wellen angebracht.

Die axial verstellbaren Kegelscheiben 23, 24 sind dabei in an sich bekannter Weise als Zylindermäntel von hydraulischen Druckzylindern ausgebildet, deren Kolben wellenfest angeordnet sind. Die für die Verstellung des Kegelscheibensatzes notwendigen hydraulischen Verbindungen, Ventil, Pumpen etc. sind im hier vorliegenden Beispiel nicht dargestellt, da sie dem Fachmann grundsätzlich bekannt sind.

Die Abtriebswelle 7 des Kegelscheibensatzes 5 ist über eine Zwischenhülse 26 innerhalb des Mehrfachwellenschalters 8 drehfest mit dem Fahrantriebsausgang 10 zu verbinden, der, wie in Figur 1 zu erkennen ist, auf die dort dargestellte Antriebsachse 15 wirkt.

Auf dem bisher beschriebenen Weg wird die Leistung des Motors 1 so auf den Fahrantriebsausgang 10 geleitet, dass der Kegelscheibensatz 5 genutzt wird. Damit kann bei einer sich im Fahrbetrieb ändernden Last das am Fahrantriebsausgang 10 anstehende Drehmoment bei einer Drehzahlkonstanz dieses Ausganges erhöht werden, indem der Motor 1 eine erhöhte Leistung bei erhöhter Drehzahl abgibt. Andererseits ist es über die stufenlos Verstellung auch möglich, den Motor 1 weiterhin mit einer konstanten Leistung bei konstanter Drehzahl zu betreiben und durch die stufenlose Verstellung im Kegelscheibensatz 5 das am Fahrantriebsausgang anstehende Drehmoment zu erhöhen bei gleichzeitiger Absenkung von dessen Drehzahl.

Für einen Zapfwellenantrieb bei einem Nutzfahrzeug, wie es hier beschrieben wird, trägt im in der Figur 2 dargestellten Beispiel die Eingangswelle 19 außer dem bereits besprochenen Zahnrad 20 an ihrem in der Figur 2 rechts dargestellten Ende auch noch ein drehfest mit ihr verbundenes Zahnrad 27. Dieses kämmt mit einem Gegenzahnrad 28, das drehfest auf einer als Schaltwelle ausgebildeten Durchtriebswelle 6 angeordnet ist. Somit bilden das Zahnrad 27 und das Gegenzahnrad 28 gemäß Figur 2 ebenfalls einen Teil des Verteilgetriebes 2 gemäß Figur 1.

Im hier dargestellten Beispiel ist die Schaltwelle 6 als Hohlwelle ausgeführt und durch ihren (hohlen) Innenbereich ist die oben angesprochene Abtriebswelle 7 des Kegelscheibensatzes 5 geführt achsparallel zu der Welle des Fahrantriebsausganges 10.

Die Schaltwelle 6 ist mittels einer Schiebehülse 30 mit einem ebenfalls als Hohlwelle ausgebildeten Zapfwellenausgang 9 zu verbinden, die im hier dargestellten Beispiel achsparallel verläuft zu der Welle des Zapfwellenausganges 10.

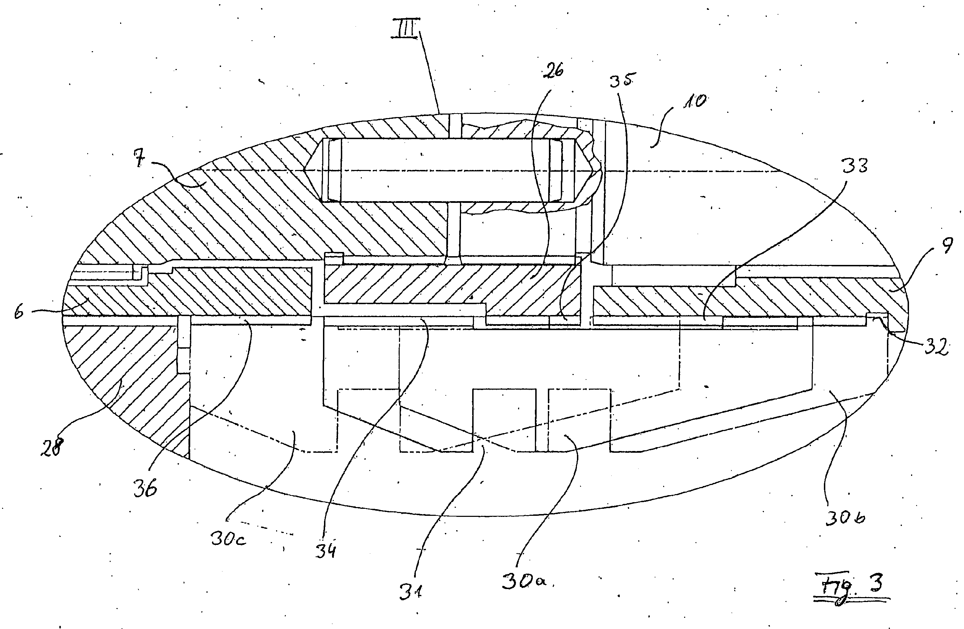

Die Schiebehülse 30 als auch die Zwischenhülse 26 sind in mehrere unterschiedliche Stellungen zu schieben, wie sie in der Figur 3 dargestellt sind. Mit diesen verschiedenen Stellungen der Zwischenhülse 26 bzw. der Schiebehülse 30 können unterschiedlichste Antriebskonstellationen in dem mit ihnen gebildeten Mehrfachwellenschalter 8 erreicht werden:

In der Figur 3 ist die Schiebehülse 30 mit durchgezogenen Linien (mit 30a bezeichnet) in einer Neutralstellung dargestellt. Die Schiebehülse 30 sitzt dabei zwar (an ihrem in der Darstellung rechten Ende) auf der Welle 9 des Zapfwellenausganges auf, ist aber an ihrem anderen Ende frei und weder mit der Schaltwelle 6 noch mit der Zwischenhülse 26 verbunden. In dieser Stellung wird die Welle 9 des Zapfwellenantriebs nicht angetrieben und der Motor 1 treibt lediglich den Fahrantriebsausgang 10 an und von dort die Antriebsachse 15.

Außerdem kann die Schiebehülse 30 über ein (nicht dargestelltes) Schaltgestänge, das an einer umlaufenden Nut 31 der Schiebehülse 30 angreift, in eine in der Figur 3 rechts strichpunktiert dargestellte (mit 30b bezeichnete) Position verschoben werden. In dieser Position wird die Schiebehülse 30b dann einerseits an ihrem in der Darstellung rechten Ende mit einer Innenverzahnung 32 mit einer Außenverzahnung 33 der Welle 9 des Zapfwellenabtriebes drehfest verbunden. An ihrem gegenüberliegenden Ende ist die Schiebehülse 30b mit einer weiteren Innenverzahnung 34 dann mit einer Außenverzahnung 35 an der Zwischenhülse 26 drehfest verbunden. Hierdurch wird eine starre Verbindung realisiert zwischen der Welle 9 des Zapfwellenausganges und der Abtriebswelle 7 des stufenlosen Kegelscheibengetriebes 5. In dieser Stellung der Schiebehülse 30b ist also für die Zapfwelle eine über das Kegelscheibengetriebe 5 zu verstellende Drehzahl vorgesehen, wodurch eine stufenlose Zapfwelle erreicht wird.

Es ist in einem solchen Fall insbesondere möglich, die zwischen der Welle 10 des Fahrantriebes und der Antriebsachse 15 vorgesehene Kupplung 13 zu öffnen. In einem solchen Fall ist dann die Zapfwelle 12 über das Kegelscheibengetriebe 5 mit dem Motor 1 verbunden, so dass bei einem Motor bei konstanter Leistungsabgabe das an der Zapfwelle 12 anstehende Drehmoment mit einer gleichzeitigen Drehzahlabsenkung bedarfsgerecht einzustellen ist. Insbesondere ist dies auch wegen der geöffneten Kupplung 13 möglich, während das Nutzfahrzeug stillsteht.

Alternativ kann die Schiebehülse 30 auch in ein in der Figur 3 links doppelpunktiert dargestellte (und mit 30c bezeichnete) Position gefahren werden. Bei dieser greift dann die Innenverzahnung 34 in eine Außenverzahnung 36 der Schaltwelle 6 ein. In dieser Stellung der Schiebehülse 30 ist die Zapfwelle 17 somit auf "klassische Weise" (das heißt als Getriebe-Zapfwelle) über die Zahnräder 28, 27 und die Antriebswelle 19 mit dem Motor 1 verbunden und es können Zapfwellenarbeiten erledigt werden, bei denen eine motorproportionale Drehzahl erreicht wird.

Somit ist durch die Schalthülse 30 eine einfach zu realisierende Möglichkeit erreicht, die Zapfwelle entweder mit der Abtriebs- oder aber der Antriebsseite des Kegelscheibengetriebes 5 zu verbinden. Bei einer Verbindung mit der Antriebsseite des Kegelscheibengetriebes 5 wird die Zapfwelle dabei eine zur Drehzahl des Motors konstante Drehzahl aufweisen, während die Zapfwelle bei einer Verbindung mit der Abtriebsseite der Zapfwelle über das dabei zwischengeschaltete stufenlos verstellbare Kegelscheibengetriebe 5 angetrieben werden.

Nicht dargestellt ist in den hier vorgelegten Zeichnungen die Verstellvorrichtungen für das stufenlose Kegelscheibengetriebe mit dem Kegelscheibensatz 5. Eine derartige Verstellung kann entweder manuell durch einen Bediener erfolgen, der insbesondere akustisch wahrnimmt, wenn der Motor 1 zu stark belastet wird.

Alternativ kann ein entsprechender Verstellvorgang aber auch durch einen Mikroprozessor ausgelöst werden, der vorzugsweise auf ein konstantes Motormoment regelt und so sicherstellt, dass Industriemotoren mit ihrer nahezu Konstantmomentcharakteristik nicht "abgewürgt" werden.

Als Signal für einen derartigen Mikroprozessor wäre einerseits möglich, ein Signal aus dem hydraulischen Verstell- und Anpressdruck des stufenlosen Kegelscheibenumschlingungsgetriebes zu entnehmen. Aber auch ein Signal vom elektrischen Motormanagement kann hier einfließen.

Es sei in diesem Zusammenhang auch noch erwähnt, dass die Verstellung des stufenlosen Kegelscheibenumschlingungsgetriebes auch über eine Fernsteuerung beeinflusst werden kann, so dass insbesondere eine reine Zapfwellenarbeit auch von außerhalb des Nutzfahrzeuges zu überwachen ist. Derartige Fernbedienungen für solche Arbeiten sind aber grundsätzlich bereits bekannt.

## Patentansprüche

1. Nutzfahrzeug mit einem Motor (1), einem stufenlos übersetzungsverändlichen Getriebe (5), sowie mit einem Fahrantrieb (10) und mit einer Zapfwelle (12), die von.dem Motor (1) antreibbar sind,
wobei
Schaltmittel (8) vorgesehen sind, über die die Zapfwelle (12) alternativ mit der Antriebsseite oder der Abtriebsseite des stufenlosen Getriebes (5) zu verbinden ist,
**dadurch gekennzeichnet,**
**dass** im Schaltmittel (8) eine Schiebehülse (30) vorgesehen ist, über die die alternative Verbindung der Zapfwelle (12) mit der Antriebsseite oder der Abtriebsseite des stufenlosen Getriebes (5) zu bewirken ist.

2. Nutzfahrzeug gemäß Anspruch 1,
**dadurch gekennzeichnet,**
**dass** das stufenlos übersetzungsveränderliche Getriebe ein Kegelscheibengetriebe (5) ist.

3. Nutzfahrzeug gemäß Anspruch 1,
**dadurch gekennzeichnet,**
**dass** zwischen Abtriebsseite des Getriebes (5) und einem im Fahrantrieb vorhandenen Antriebsachse (15) eine Trennkupplung (13) vorgesehen ist.

4. Nutzfahrzeug gemäß Anspruch 1,
**dadurch gekennzeichnet,**
**dass** die Schiebehülse (30) in eine Stellung bringbar ist, in der Zapfwelle (12) und Motor (1) wirkungsmäßig getrennt sind.

5. Nutzfahrzeug gemäß Anspruch 1,
**dadurch gekennzeichnet,**
**dass** die Schiebehülse (30) über ein Schaltgestänge verschiebbar ist.

6. Nutzfahrzeug gemäß Anspruch 1,
**dadurch gekennzeichnet,**
**dass** eine elektronische Regelung für das Getriebe (5) vorgesehen ist.

7. Nutzfahrzeug gemäß Anspruch 6,
**dadurch gekennzeichnet,**
**dass** die elektronische Regelung ein konstantes Drehmoment des Motors (1) regelt.

8. Nutzfahrzeug gemäß Anspruch 6,
**dadurch gekennzeichnet,**
**dass** der elektronischen Regelung als Führungssignal ein zum Druck innerhalb des Kegelscheibengetriebes proportionales Signal zugeführt wird.

9. Nutzfahrzeug gemäß Anspruch 6,
**dadurch gekennzeichnet,**
**dass** der elektronischen Regelung als Führungssignal ein Signal einer elektronischen Motorsteuerung zugeführt wird.

## Claims

1. A utility vehicle with a motor (1), a transmission system (5) of continuously variable transmission ratio and with a drive assembly (10) and a power take-off shaft (12), which are drivable by the motor (1), wherein switching means (8) are provided, by means of which the power take-off shaft (12) may be connected to the drive side or alternatively to the driven side of the continuously variable transmission (5), **characterised in that** provided in the switching means (8) there is a box sleeve (30), by means of which the alternative connection of the power take-off shaft (12) with the drive side or the driven side of the continuously variable transmission (5) may be effected.

2. A utility vehicle as claimed in Claim 1, **characterised in that** the transmission system of continuously variable transmission ratio is a conical pulley transmission (5).

3. A utility vehicle as claimed in Claim 1, **characterised in that** provided between the driven side of the transmission (5) and a drive shaft (15) provided in the drive assembly there is a disconnect-type clutch (13).

4. A utility vehicle as claimed in Claim 1, **characterised in that** the box sleeve (30) is movable into a position in which the power take-off shaft (12) and the motor (1) are operatively separated.

5. A utility vehicle as claimed in Claim 1, **characterised in that** the box sleeve (3) is movable by means of a switching linkage.

6. A utility vehicle as claimed in Claim 1, **characterised in that** an electronic controller is provided for the transmission (5).

7. A utility vehicle as claimed in Claim 6, **characterised in that** the electronic controller controls a constant torque from the motor (1).

8. A utility vehicle as claimed in Claim 6, **characterised in that** a signal proportional to the pressure within the conical pulley transmission is supplied to the electronic controller as a control signal.

9. A utility vehicle as claimed in Claim 6, **characterised in that** a signal from an electronic motor controller is supplied to the electronic controller as a control signal.

## Revendications

1. Véhicule utilitaire comprenant un moteur (1), une transmission (5) à démultiplication variable en continu, ainsi qu'un entraînement en déplacement (10) et un arbre (12) de prise de force, pouvant être menés par ledit moteur (1),
comportant
des moyens sélecteurs (8) par l'intermédiaire desquels l'arbre (12) de prise de force doit être relié, alternativement, au côté menant ou au côté mené de la transmission continue (5),
**caractérisé par**
la présence, dans le moyen sélecteur (8), d'une douille coulissante (30) par l'intermédiaire de laquelle peut être provoquée la liaison alternative de l'arbre (12) de prise de force avec le côté menant ou le côté mené de la transmission continue (5).

2. Véhicule utilitaire selon la revendication 1,
**caractérisé par le fait**
**que** la transmission à démultiplication variable en continu est une transmission (5) à disques coniques.

3. Véhicule utilitaire selon la revendication 1,
**caractérisé par le fait**
**qu'**un accouplement de séparation (13) est prévu entre le côté mené de la transmission (5) et un essieu d'entraînement (15) présent dans l'entraînement en déplacement.

4. Véhicule utilitaire selon la revendication 1,
**caractérisé par le fait**
**que** la douille coulissante (30) peut être amenée à une position dans laquelle l'arbre (12) de prise de force et le moteur (1) sont fonctionnellement séparés.

5. Véhicule utilitaire selon la revendication 1,
**caractérisé par le fait**
**que** la douille coulissante (30) peut être animée de coulissements par l'intermédiaire d'une tringlerie de commutation.

6. Véhicule utilitaire selon la revendication 1,
**caractérisé par le fait**
**qu'**une régulation électronique est prévue pour la transmission (5).

7. Véhicule utilitaire selon la revendication 6,
**caractérisé par le fait**
**que** la régulation électronique régule un couple de rotation constant du moteur (1).

8. Véhicule utilitaire selon la revendication 6,
**caractérisé par le fait**
**qu'**un signal, proportionnel à la pression régnant à l'intérieur de la transmission à disques coniques, est délivré à la régulation électronique en tant que signal de guidage.

9. Véhicule utilitaire selon la revendication 6,
**caractérisé par le fait**
**qu'**un signal d'une commande électronique du moteur est délivré à la régulation électronique, en tant que signal de guidage.
